# EUROPÄISCHE PATENTSCHRIFT

(11) **EP 2 129 638 B1**
(45) Veröffentlichungstag und Bekanntmachung des Hinweises auf die Patenterteilung: **13.08.2014**
(21) Anmeldenummer: 08717342.3
(22) Anmeldetag: 03.03.2008
(51) Int. Cl.: C04B 38/00, C04B 38/06, B01D 46/24, B01D 46/52, F01N 3/022, F01N 3/035, F01N 3/021

(54) **DIESELPARTIKELFILTER MIT EINEM KERAMISCHEN FILTERKÖRPER**
DIESEL PARTICLE FILTER WITH A CERAMIC FILTER BODY
FILTRE À PARTICULES DIESEL POURVU D'UN CORPS FILTRANT EN CÉRAMIQUE

(30) Priorität: 08.03.2007 DE 102007011569
(43) Veröffentlichungstag der Anmeldung: 09.12.2009
(73) Patentinhaber: MANN+HUMMEL GmbH, 71638 Ludwigsburg (DE)
(72) Erfinder: MICKE, Michael, 596722 Singapore (SG); OTTERBACH, Sabine, 74321 Bietigheim-Bissingen (DE)
(86) Internationale Anmeldenummer: PCT/EP2008/052579
(87) Internationale Veröffentlichungsnummer: WO 2008/107423

(56) Entgegenhaltungen:
- EP-A- 1 522 686
- EP-A- 1 930 060
- EP-A1- 1 958 927
- EP-A1- 1 961 717
- WO-A-2006/005668
- DE-U1-202007 002 430
- US-A1- 2003 190 269

## Beschreibung

### Technisches Gebiet

Die Erfindung betrifft einen Dieselpartikelfilter mit einem keramischen Filterkörper mit den Merkmalen nach dem Oberbegriff des Anspruchs 1 sowie ein Verfahren zur Herstellung eines entsprechenden keramischen Filterkörpers.

### Stand der Technik

Aus der DE 35 01 182 A1 ist ein Abgasfilter für Dieselmotoren bekannt. Die dort offenbarten keramischen Filterkörper weisen geschichtete, flächige und poröse Filterwände auf, zwischen denen Gaskanäle gebildet sind. Die Gaskanäle sind wechselseitig verschlossen. Ein auf einer Seite in die dorthin offenen Gaskanäle einströmender Abgasstrom wird durch die Verschlussstopfen gezwungen, die porösen Filterwände quer zu ihrer Fläche zu durchströmen. Die auf der gegenüberliegenden Seite befindlichen Abgaskanäle sind in Abströmrichtung offen und geben den filtrierten Abgasstrom frei.

Zur Herstellung der dort gezeigten keramischen Filterkörper werden keine Angaben gemacht. Geometrisch vergleichbare Körper, wie sie beispielsweise von Abgaskatalysatoren bekannt sind, werden durch Extrudieren hergestellt. Dies erfordert einen hohen Werkzeugaufwand für die Formgebung. Die Freiheitsgrade bei der Formgebung des Filterkörpers und insbesondere der Filterwände sowie der Gaskanäle ist durch den Extrusionsprozess eingeschränkt. Eine strömungsoptimale Ausgestaltung des Dieselpartikelfilters ist schwierig.

Die WO 2006/005668 A1 zeigt einen keramischen Abgasfilter für Brennkraftmaschinen, dessen Filterkörper aus keramisch imprägniertem Papier gebildet ist. Je eine glatte und eine wellige imprägnierte Papierbahn werden zu einem Halbzeug unter Bildung von Gaskanälen geschichtet und zu einem Wickelkörper aufgerollt. Die Wellen der gewellten Papierbahn haben über ihre gesamte Länge eine konstante Form, so dass auch die Gaskanäle entlang ihrer Lauflänge einen konstanten Querschnitt aufweisen. Für eine Querdurchströmung der Kanalwände sind die Strömungskanäle mittels Stopfen wechselseitig verschlossen. Eingangsseitig und ausgangsseitig des Dieselpartikelfilters stehen jeweils nur die Hälfte des Gesamtquerschnittes des keramischen Filterkörpers für eine Ein- bzw. Ausströmung zur Verfügung. Wirkungsgrad und Bauvolumen der gezeigten Anordnung sind verbesserungsfähig.

Der Erfindung liegt die Aufgabe zugrunde, einen gattungsgemäßen Dieselpartikelfilter derart weiterzubilden, dass mit geringem Platzbedarf eine verbesserte Abgasnachbehandlung möglich ist.

Diese Aufgabe wird durch einen Dieselpartikelfilter mit den Merkmalen des Anspruchs 1 gelöst.

### Offenbarung der Erfindung

Es wird ein Dieselpartikelfilter vorgeschlagen, bei dem der Filterkörper zusätzlich zum Filterabschnitt mindestens einen katalytischen Abschnitt zur katalytischen Reinigung des Abgasstromes aufweist, wobei der Filterkörper zusammen mit dem Filterabschnitt und dem mindestens einen katalytischen Abschnitt einteilig aus mindestens einer keramisch imprägnierten Faserbahn, insbesondere Papier unter Bildung der Gaskanäle geformt und derart unter Temperatur durch Sintern gebildet ist, dass Fasern des Fasermaterials freigebrannt sind, und dass das Keramikmaterial unter Bildung des Filterkörpers mit dem mindestens einen katalytischen Abschnitt und dem Filterabschnitt einteilig monolithisch zusammengesintert ist. Erfindungsgemäß sind die Gaskanäle zwischen dem Filterabschnitt und dem katalytischen Abschnitt unter Bildung eines Querströmungsabschnittes unterbrochen, derart, dass zwischen zwei glatten Faserbahnen mindestens zwei in der Längsrichtung mit Abstand zueinander angeordnete gewellte Faserbahnen angeordnet sind, wobei die eine gewellte Faserbahn zusammen mit den beiden glatten Faserbahnen die Gaskanäle des katalytischen Abschnitts bildet, wobei die andere gewellte Faserbahn zusammen mit den beiden gleichen, durchgehenden und glatten Faserbahnen die Gaskanäle des Filterabschnitts bildet, und wobei der Abstand zwischen den mindestens zwei gewellten Faserbahnen den Querströmungsabschnitt bildet.

In einem entsprechenden Herstellungsverfahren wird mit einfachen Mitteln ein einteiliger, monolithischer Filterkörper hergestellt, in dem eine katalytische und eine mechanisch filtrierende Abgasnachbehandlung vereint sind. Die Anordnung ist platzsparend und einfach herstellbar. Das direkte aneinander Angrenzen des Filterabschnittes an den mindestens einen katalytischen Abschnitt verringert den Durchströmungswiderstand und steigert die Wirksamkeit der Abgasreinigung.

Ein eingangsseitiger katalytischer Abschnitt weist vorteilhaft eine katalytische Beschichtung in Form einer oxidierenden Katalysatorbeschichtung zur Verminderung des CO- bzw. HC-Gehaltes im Abgasstrom auf. Alternativ oder in Kombination damit weist ein ausgangsseitiger katalytischer Abschnitt zweckmäßig eine katalytische Beschichtung insbesondere in Form einer NOX-Speicherbeschichtung auf. Mit nur einem einzigen einteiligen Filterkörper kann eine vollständige Abgasnachbehandlung vorgenommen werden. Im Abgasstrom enthaltene Stickoxide (NOX) werden über eine bestimmte Betriebsdauer in der NOX-Speicherbeschichtung eingelagert, ohne mit dem Abgasstrom ins Freie zu gelangen. In bestimmten Zeitabständen kann dann eine Regenerierung der Speicherbeschichtung beispielsweise durch einen kurzzeitigen Betrieb mit übermäßig fettem Kraftstoff/Luft-Gemisch und einer daraus folgenden Desorption und Reduktion erfolgen. An Stelle der Ausbildung als NOX-Speicherkatalysator kann auch eine Ausbildung als SCR-Katalysator zweckmäßig sein.

Eine weitere vorteilhafte Option besteht darin, dass der Filterabschnitt eine katalytische Beschichtung zur Reduzierung der Zündtemperatur von in den gasdurchlässigen Filterwänden zurückgehaltenen Partikeln aufweist. Bei einem entsprechenden Verschmutzungsgrad der Filterwände kann der Filterkörper ggf. mit mäßig erhöhter Temperatur betrieben werden, in dessen Folge die eingelagerten, ausgefilterten Partikel verbrannt werden. Die Lebensdauer des Filterkörpers ist nahezu unbegrenzt.

In einer bevorzugten Ausführungsform sind benachbarte Gaskanäle wechselseitig auf einer Einströmseite des Filterabschnittes und auf einer Ausströmseite des Filterabschnittes durch Verschlussstopfen, insbesondere aus Keramikmaterial, verschlossen, wobei der Filterabschnitt bezogen auf eine Längsrichtung der Gaskanäle zwischen den Verschlussstopfen liegt, und wobei der mindestens eine katalytische Abschnitt bezogen auf die Längsrichtung außerhalb des durch die Verschlussstopfen begrenzten Filterabschnitts liegt.

In einer vorteilhaften Ausführungsform sind die Gaskanäle zwischen dem Filterabschnitt und dem katalytischen Abschnitt unter Bildung eines Querströmungsabschnittes unterbrochen. Die Gaskanäle des katalytischen Abschnittes sind hierbei nicht durch die Verschlussstopfen blockiert und können sämtlich unter Ausnutzung der gesamten zur Verfügung stehenden katalytischen Oberfläche durchströmt werden. Der Querströmungsabschnitt vermeidet im eingangsseitigen katalytischen Abschnitt eine Aufstauwirkung durch die Verschlussstopfen des Filterabschnittes. Ein ausgangsseitiger katalytischer Abschnitt kann durch Ausbildung einer Querströmung frei angeströmt werden. Durch geeignete Ausbildung des Querströmungsabschnittes kann eine gewünschte Verwirbelung sowie eine saubere Anströmung aus dem katalytischen Abschnitt in den Filterabschnitt bzw. Abströmung aus dem Filterabschnitt in einen nachgeschalteten katalytischen Abschnitt herbeigeführt werden.

Zweckmäßig sind zwischen zwei glatten Faserbahnen mindestens zwei in der Längsrichtung mit Abstand zueinander angeordnete gewellte Faserbahnen angeordnet, wobei die eine gewellte Faserbahn zusammen mit den beiden glatten Faserbahnen die Gaskanäle des katalytischen Abschnitts bildet, wobei die andere gewellte Faserbahn zusammen mit den beiden gleichen, durchgehenden und glatten Faserbahnen die Gaskanäle des Filterabschnitts bildet, und wobei der Abstand zwischen den mindestens zwei gewellten Faserbahnen den Querströmungsabschnitt bildet. Allein durch die räumliche Trennung bzw. Beabstandung der beiden gewellten Faserbahnen kann der in Strömungsrichtung bzw. Längsrichtung zwischenliegende Querströmungsabschnitt hergestellt werden. Eine Umformung, Beschneidung, Lochbildung oder dgl. kann zwar vorgenommen werden, ist aber nicht unbedingt erforderlich. Die getrennte Ausbildung der beiden Faserbahnen erlaubt ohne weiteres eine unterschiedliche geometrische Ausgestaltung sowie den Einsatz unterschiedlicher Materialien. Die Strömungsverhältnisse können mit geringem Fertigungsaufwand optimiert werden.

In bevorzugter Weiterbildung weist die gewellte Faserbahn des katalytischen Abschnitts eine von der gewellten Faserbahn des Filterabschnitts abweichende, insbesondere dem gegenüber verringerte Wellenlänge und/ oder abweichende Wellenform auf. Die verringerte Wellenlänge im katalytischen Abschnitt erhöht die Anzahl der zugehörigen Gaskanäle und damit die katalytisch wirksame Oberfläche. Der katalytische Abschnitt kann entsprechend platzsparend ausgeführt sein.

In einer zweckmäßigen Ausführung sind zur Bildung der Gaskanäle des katalytischen Abschnitts mindestens zwei gewellte Faserbahnen zwischen den beiden glatten Faserbahnen insbesondere unter Zwischenlage einer weiteren glatten Faserbahn übereinander gestapelt. Es entstehen zwei oder mehr Schichten von katalytischen Gaskanälen, deren Gesamthöhe vorteilhaft der Höhe der zugeordneten Gaskanäle des Filterabschnittes entspricht. Hierdurch bleibt die Möglichkeit erhalten, trotz mehrerer Schichten von katalytischen Gaskanälen einen im Querschnitt konstanten, beispielsweise etwa zylindrischen Wickelkörper zu bilden. Die Anzahl der katalytischen Gaskanäle und die damit zur Verfügung stehende katalytisch wirksame Oberfläche werden weiter erhöht. Es werden zusätzliche Möglichkeiten zur Strömungs- und Widerstandsoptimierung geschaffen.

Insbesondere weisen Wände der Gaskanäle, die durch die keramisch imprägnierte Faserbahn gebildet sind, im Bereich des mindestens einen katalytischen Abschnitts Öffnungen auf, die die Gaskanäle an dieser Stelle strömungsleitend miteinander verbinden. Hierdurch kann im Eingangs- bzw. Ausgangsbereich des Filterkörpers der vollständige Kanalquerschnitt sämtlicher Gaskanäle genutzt werden, wodurch die An- und Abströmverhältnisse infolge eines verringerten Strömungswiderstandes und/oder durch gezielte Wirbelbildung verbessert sind. Es werden auch die Strömungsquerschnitte derjenigen Gaskanäle genutzt, die ohne solche Öffnungen infolge der Verschlussstopfen von einer Durchströmung ausgeschlossen wären.

Zweckmäßig sind beide Typen von benachbarten Gaskanälen, also diejenigen, die stirnseitig des Filterabschnitts an den jeweiligen Verschlussstopfen enden und diejenigen, die bis in den Filterabschnitt hineinreichen, mit einer katalytischen Beschichtung versehen. Die hier angebrachten Öffnungen und die daraus folgende Querströmung setzen den Abgasstrom in Kontakt mit den Wänden sämtlicher Gaskanäle. Unter Ausnutzung des gesamten Strömungsquerschnittes des Filterkörpers kann die katalytische Beschichtung auf den Abgasstrom einwirken. Insgesamt ist ein nur geringer Querschnitt des Filterkörpers erforderlich, um die gewünschte Reinigungswirkung bei geringem Durchströmungswiderstand zu erzielen.

In vorteilhafter Weiterbildung werden die Öffnungen im Filterkörper dadurch gebildet, dass Abschnitte der mindestens einen Faserbahn von der keramischen Imprägnierung ausgenommen werden. Hierzu kann das noch nicht imprägnierte Fasermaterial mit Ausschnitten versehen werden, in denen die Faserbahn kein Keramikmaterial aufnehmen kann. Alternativ oder zusätzlich kann es zweckmäßig sein, das Keramikmaterial auf die mindestens eine Faserbahn nur partiell aufzutragen, wodurch von der keramischen Imprägnierung ausgenommene Abschnitte der Faserbahn entstehen. Eine weitere vorteilhafte Möglichkeit besteht in Auftragungen auf die mindestens eine Faserbahn, die eine keramische Imprägnierung verhindern. Hierzu kann eine Auftragung eines geeigneten Klebers wie Heißkleber, Epoxydharz oder dgl. vorteilhaft sein. In vorgenannter Weise kann mit einfachen Mitteln eine selektive bzw. partielle keramische Imprägnierung vorgenommen werden, die die Gestalt des späteren Filterkörpers vorgibt. Die Zellulosefasern oder andere geeignete Fasern der Faserbahn verbrennen beim Sinterprozess. Die nicht getränkten Faserabschnitte und Ausschnitte in der Faserbahn hinterlassen Öffnungen und Außenkonturen in gewünschter Form, Anzahl und Positionierung. Nahezu beliebige geometrische Ausbildungen des Filterkörpers sind auf einfache Weise realisierbar.

In vorteilhafter Weiterbildung werden der Filterabschnitt und der katalytische Abschnitt derart mit dem Keramikmaterial imprägniert, dass sich im Filterabschnitt und im katalytischen Abschnitt nach dem Sinterprozess eine unterschiedliche Porosität des gesinterten Keramikmaterials einstellt. Auf diese Weise kann die Porosität im Filterabschnitt auf die gewünschte Filtrierwirkung eingestellt werden, während die Porosität des katalytischen Abschnittes unabhängig vom Filterabschnitt derart abgestimmt wird, dass der Abgasstrom mit einer hinreichend großen katalytisch wirksamen Oberfläche in Kontakt kommt.

### Kurze Beschreibung der Zeichnungen

Ausführungsbeispiele der Erfindung sind nachfolgend anhand der Zeichnung näher beschrieben. Figuren 1 - 6 dienen dabei zur Erläuterung der in Figuren 7 und 8 gezeigten, erfindungsgemäßen Ausführungsbeispiele. Es zeigen:

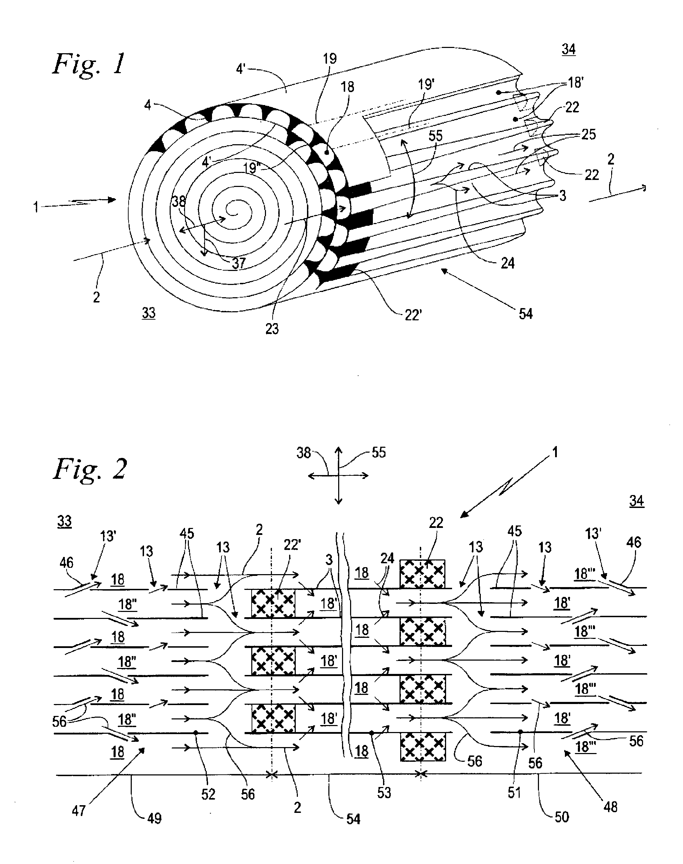

- Figur 1: in schematischer Perspektivdarstellung einen Filterabschnitt eines keramischen Filterkörpers aus keramisch imprägnierten, gewickelten Faserbahnen,
- Figur 2: eine schematische Längsschnittdarstellung benachbarter Gaskanäle mit zwischenliegenden Öffnungen für einen ungehinderten Gasaustausch in katalytischen Verwirbelungsabschnitten des keramischen Filterkörpers,

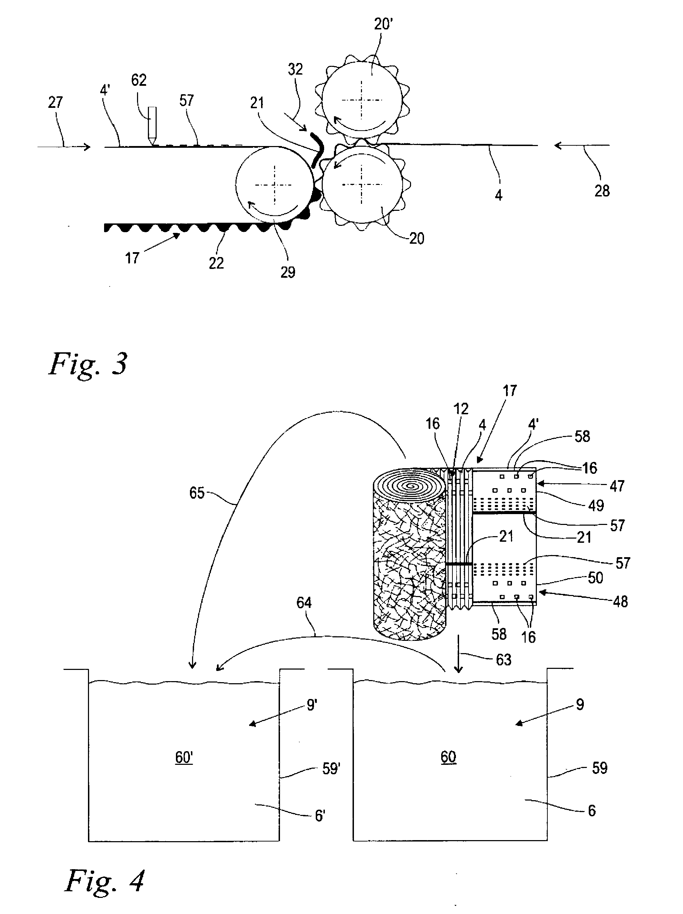

- Figur 3: eine Schemadarstellung einer Walzanlage zur Formung und Fügung von Faserbahnen zu einem Halbzeug,
- Figur 4: einen aus dem Halbzeug nach Fig. 3 gebildeten Rohling bei der keramischen Imprägnierung in einem Tauchbad,

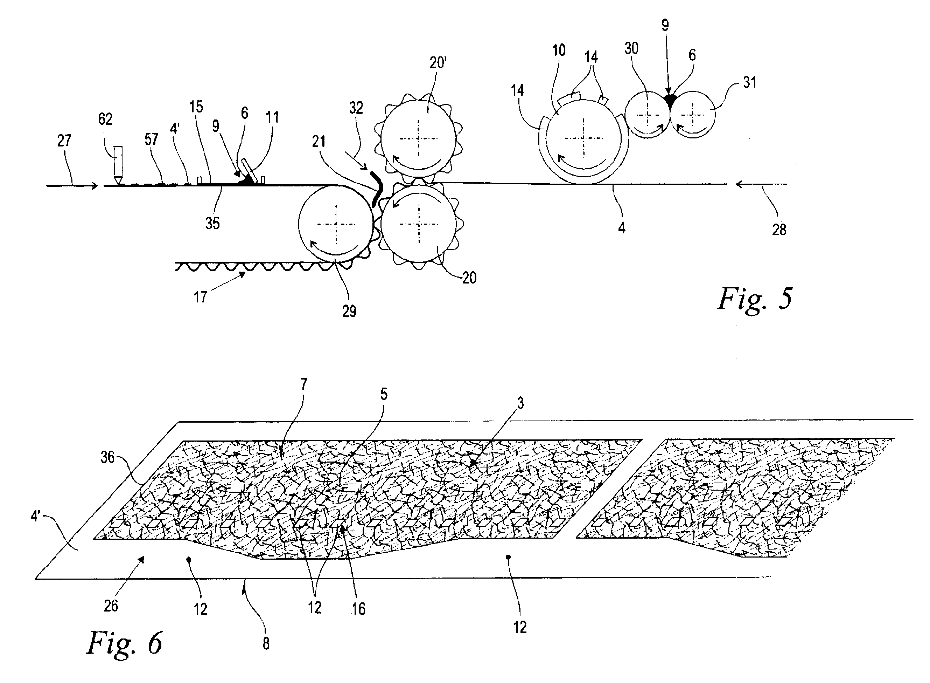

- Figur 5: eine Schemadarstellung einer Walz- und Rakelanlage zur Imprägnierung von Faserbahnen mit Keramikmaterial, sowie zur Formgebung und Fügung zu einem Halbzeug,
- Figur 6: eine schematische Perspektivdarstellung einer mit der Anordnung nach Figur 5 teilweise imprägnierten, mit Ausschnitten versehenen Faserbahn,

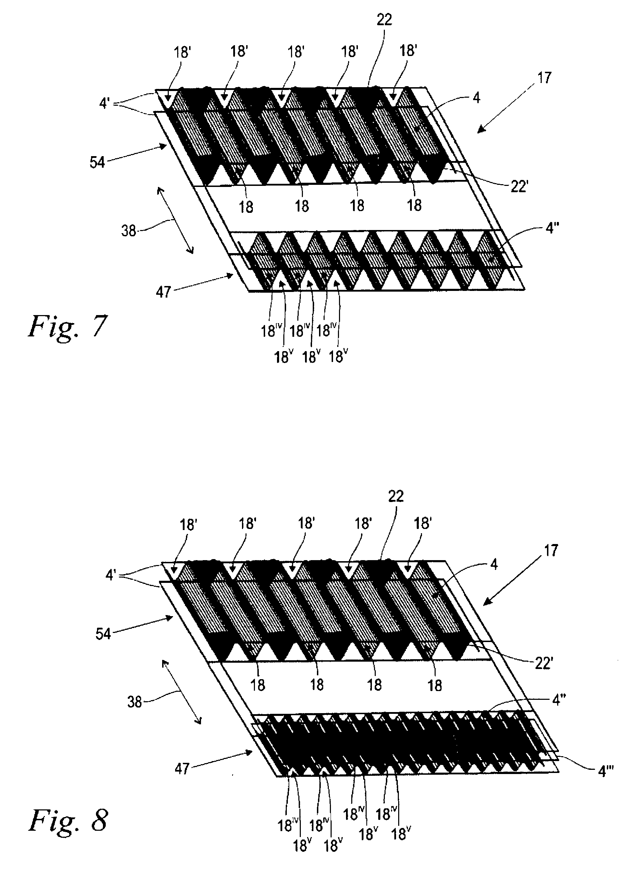

- Figur 7: eine schematische Perspektivdarstellung eines Halbzeuges zur Bildung des erfindungsgemäßen Filterkörpers mit getrennten gewellten Faserbahnen im katalytischen Abschnitt und im Filterabschnitt mit einem zwischenliegenden Querströmungsabschnitt,
- Figur 8: eine Variante der erfindungsgemäßen Anordnung nach Figur 7 mit zwei übereinander gestapelten gewellten Faserbahnen im Bereich des katalytischen Abschnitts zur Bildung einer erhöhten Anzahl von katalytischen Gaskanälen.

### Ausführungsform(en) der Erfindung

Figur 1 zeigt in schematischer, teilweise geschnittener Perspektivdarstellung einen keramischen Filterkörper 1 im Bereich seines Filterabschnittes 54. Der Filterabschnitt 54 ist Teil eines in Fig. 2 schematisch dargestellten Filterkörpers 1, der wiederum Teil eines nicht näher dargestellten, zur Filtrierung eines Abgasstromes 2 eines Dieselmotors vorgesehenen Dieselpartikelfilters ist. Der Filterkörper 1 ist durch weiter unten im Zusammenhang mit den Figuren 3 bis 6 näher beschriebene, keramisch imprägnierte Faserbahnen 4, 4' gebildet. Die Faserbahnen 4, 4' sind entsprechend der Darstellung nach den Figuren 3 bis 5 zu einem Halbzeug 17 zusammengefügt, welches zu dem näherungsweise zylindrisch ausgeführten Filterkörper 1 nach Fig. 1 aufgewickelt ist. Durch das Aufwickeln der keramisch imprägnierten Faserbahnen 4, 4' zu einem Wickelkörper entsteht eine Schichtungsrichtung, die zu einer Radialrichtung 37 des zylindrischen Filterkörpers 1 identisch ist. Alternativ kann es auch zweckmäßig sein, mehrere gewellte Faserbahnen 4 bzw. Halbzeuge 17 (Figuren 4 und 6) in einer Ebene anzuordnen und stapelartig übereinanderzuschichten.

Es ist eine Durchströmung des Filterkörpers 1 vom Abgasstrom 2 in einer Axialrichtung 38 des Filterkörpers 1 von einer Einströmseite 33 zu einer Ausströmseite 34 vorgesehen. Dazu ist die erste Faserbahn 4 gewellt ausgeführt, während eine zweite Faserbahn 4' im Wesentlichen glatt ist. Der hier gewählte Begriff der Wellenform umfasst Wellen mit gerundetem, beispielsweise sinusförmigem Querschnitt, aber auch solche mit eckigem, beispielsweise dreieckigem, rechteckigem oder trapezförmigem Querschnitt. Infolge der Stapelung bzw. Wickelstruktur liegen bezogen auf die radiale Richtung 37 des Filterkörpers 1 abwechselnd eine gewellte Faserbahn 4 und eine glatte Faserbahn 4' übereinander. Die gewellte Faserbahn 4 ist mit der zweiten, glatten Faserbahn 4' entlang von einer Vielzahl zumindest näherungsweise parallel verlaufender Kontaktlinien 19, 19', 19" verbunden. Durch die Wellenform der Faserbahn 4, die glatte Form der weiteren Faserbahn 4' und die Wickelstruktur entsteht eine Vielzahl von zumindest näherungsweise achsparallel verlaufenden Gaskanälen 18, 18' mit entlang der Axialrichtung 38 konstanter, in der Radialrichtung 37 gemessener Höhe. In einer Umfangsrichtung 55 des Filterkörpers 1 sind abwechselnd je ein Gaskanal 18 und ein Gaskanal 18' vorgesehen. Die Gaskanäle 18 sind zur Einströmseite 33 hin offen und in gegenüberliegender Richtung zur Ausströmseite 34 hin mittels Verschlussstopfen 22 verschlossen. Bezogen auf die Umfangsrichtung 55 liegt zwischen zwei Gaskanälen 18 je ein Gaskanal 18', der zur Einströmseite 33 hin mittels eines Verschlussstopfens 22' verschlossen und zur Ausströmseite 34 hin offen ist. Im Betrieb strömt der Abgasstrom 2 entsprechend einem Pfeil 23 achsparallel in die zur Einströmseite 33 hin offenen Gaskanäle 18 ein. In der Umfangsrichtung 55 angeordnete Seitenwände der durch die gewellte Faserbahn 4 hergestellten keramischen Struktur bilden flächige und poröse Filterwände 3. Der an den Verschlussstopfen 22 aufgestaute Abgasstrom 2 wird in der Umfangsrichtung 55 entsprechend Pfeilen 24 abgelenkt und durchströmt die porösen keramischen Filterwände 3 quer zu ihrer Fläche. Entsprechend den Pfeilen 24 tritt der Abgasstrom 2 durch die Filterwände 3 hindurch in die zur Ausströmseite 34 hin offenen Kanäle 18 ein und strömt aus ihnen entsprechend Pfeilen 25 aus. Beim Durchtritt durch die porösen Filterwände 3 wird der Abgasstrom 2 von mitgeführten Rußpartikeln oder dgl. gereinigt.

Figur 2 zeigt eine perspektivische Längsschnittdarstellung durch einen ausgeführten Filterkörper 1 mit einem mittigen Filterabschnitt 54 und zwei in der Längsrichtung 38 daran beidseitig angrenzenden Verwirbelungsabschnitte 49, 50. Im eingangsseitigen Verwirbelungsabschnitt 49 grenzen in der Umfangsrichtung 55 Gaskanäle 18, 18" und im ausgangsseitigen Verwirbelungsabschnitt 50 Gaskanäle 18' und 18"' wechselseitig aneinander. Im mittigen Filterabschnitt 54 sind bezogen auf die Umfangsrichtung 55 Gaskanäle 18, 18' wechselseitig nebeneinander angeordnet. Die Gaskanäle 18 sind auf der Ausströmseite 34 des Filterabschnitts 54 durch Verschlussstopfen 22 verschlossen, während die ausgangsseitigen Gaskanäle 18' auf ihrer Einströmseite 33 des Filterabschnitts 54 durch Verschlussstopfen 22' verschlossen sind. Die Gaskanäle 18" des eingangsseitigen Verwirbelungsabschnittes 49 sind von den dazu in Längsrichtung fluchtenden ausgangsseitigen Gaskanälen 18' durch die Verschlussstopfen 22' getrennt, während die eingangsseitigen Gaskanäle 18 von den dazu in Längsrichtung fluchtenden Gaskanälen 18"' des ausgangsseitigen Verwirbelungsabschnittes 50 durch die Verschlussstopfen 22 getrennt sind. Der in schematischer Schnittdarstellung in der Längsrichtung 38 und der Umfangsrichtung 55 gezeigte Filterkörper 1 nach Fig. 2 ist einschließlich seiner beiden Verwirbelungsabschnitte 49, 50 entsprechend dem Filterabschnitt 54 nach Fig. 1 etwa zylindrisch aufgewickelt, kann aber auch gestapelt sein.

Bezogen auf die Längsrichtung 38 liegt der Filterabschnitt 54 zwischen den Verschlussstopfen 22, 22', während die beiden Verwirbelungsabschnitte 49, 50 bezogen auf die Längsrichtung 38 außerhalb des Filterabschnittes 54 bzw. außerhalb der Verschlussstopfen 22, 22' liegen. Im eingangsseitigen Verwirbelungsabschnitt 49 sind die in der Umfangsrichtung 55 benachbarten Gaskanäle 18, 18" durch Wände 45 voneinander getrennt, während im ausgangsseitigen Verwirbelungsabschnitt 50 die Gaskanäle 18', 18"' ebenfalls durch Wände 45 voneinander getrennt sind. In beiden Verwirbelungsabschnitten 49, 50 weisen die durch die Faserbahn 4 (Fig. 1) gebildeten Wände 45 eine Anzahl von Öffnungen 13, 13' auf, die die Gaskanäle 18, 18" bzw. die Gaskanäle 18', 18"' strömungsleitend verbinden. Zur Demonstration verschiedener, einzeln für sich oder auch in Kombination miteinander einsetzbarer Optionen ist ein Teil der Öffnungen 13 als einfache Aussparung in den Wänden 45 ausgebildet, während ein weiterer Teil der Öffnung 13' mit strömungsleitenden Laschen 46 versehen ist. Die Laschen 46 werden aus den weiter unten näher beschriebenen Faserbahnen 4, 4' teilweise ausgestanzt bzw. ausgeschnitten und aus der Ebene der jeweiligen Faserbahn 4, 4' aufgebogen. Infolge ihrer keramischen Imprägnierung und des abschließenden, weiter unten näher beschriebenen Sinterprozesses verbrennt das Fasermaterial der Faserbahnen 4, 4' (Fig. 1), wobei die Laschen 46 in rein keramischer Form zurückblieben.

Durch die Öffnungen 13, 13', ggf. strömungsleitend unterstützt durch die Laschen 46 findet ein verwirbeinder Gasaustausch zwischen den benachbarten Gaskanälen 18, 18" im eingangsseitigen Verwirbelungsabschnitt 49 bzw. zwischen den benachbarten Gaskanälen 18', 18"' im ausgangsseitigen Verwirbelungsabschnitt 50 in folgender Weise statt: Der in Fig. 1 dargestellte Abgasstrom 2 strömt nicht nur durch die eingangsseitigen Gaskanäle 18, sondern auch durch die an den Verschlussstopfen 22' endenden Gaskanäle 18" in den Filterkörper 1 ein. Der anteilige Abgasstrom der eingangsseitigen Gaskanäle 18" wird an den Verschlussstopfen 22' aufgestaut und durch die Öffnungen 13, 13' in die benachbarten eingangsseitigen Gaskanäle 18 eingeleitet. Trotz der Aufstauwirkung der Verschlussstopfen 22' steht nicht nur der Strömungsquerschnitt der eingangsseitigen Gaskanäle 18, sondern auch derjenige der eingangsseitigen Gaskanäle 18" im Verwirbelungsabschnitt 49 zur Verfügung. Demnach sind im eingangsseitigen Verwirbelungsabschnitt 49 zwei Typen von eingangsseitigen Gaskanälen 18, 18" vorhanden. Der erste Typ ist durch die Gaskanale 18 gebildet, die an den Verschlussstopfen 22' vorbei in den Filterabschnitt 54 hineinlaufen und an den ausgangsseitigen Verschlussstopfen 22 enden. Der weitere Typ ist durch die eingangsseitigen Gaskanäle 18" gebildet, die eingangsseitig des Filterabschnitts 54 an den Verschlussstopfen 22 enden und ihren anteiligen Abgasstrom mittels der Öffnungen 13, 13' an die benachbarten Gaskanäle 18 übergeben. Der eingangsseitige Verwirbelungsabschnitt 49 ist optional als katalytischer Abschnitt 47 ausgebildet, in dem beide Typen der benachbarten Gaskanäle 18, 18" auf ihren Innenwänden eine katalytische Beschichtung z.B. in Form einer oxidierenden Katalysatorbeschichtung 52 zur Verminderung des CO- bzw. HC-Gehaltes im Abgasstrom 2 aufweisen. Der auf diese Weise katalytisch nachbehandelte Abgasstrom 2 tritt durch die Gaskanäle 18 in den Filterabschnitt 54 ein, wo er infolge der Aufstauwirkung der Verschlussstopfen 22 entsprechend der Pfeile 24 durch die Filterwände 3 hindurch gedrückt wird und in die benachbarten ausgangsseitigen Gaskanäle 18' austritt.

Auch der ausgangsseitige Verwirbelungsabschnitt 50 weist zwei Typen von Gaskanälen 18', 18"' auf. Der erste Typ ist durch die ausgangseitigen Gaskanäle 18' gebildet, die stromab der Verschlussstopfen 22' beginnen und sowohl durch den Filterabschnitt 54 als auch durch den ausgangsseitigen Verwirbelungsabschnitt 50 zur Ausströmseite 34 hin verlaufen. Der weitere Typ ist durch die ausströmseitigen Gaskanäle 18"' gebildet, die stromab des Filterabschnittes 54 und dessen außenseitiger Verschlussstopfen 22 allein im ausgangseitigen Verwirbelungsabschnitt 50 verlaufen. Um auch den Strömungsquerschnitt der eingangseitig durch die Verschlussstopfen 22 abgetrennten Gaskanäle 18"' zu nutzen, sind die Öffnungen 13, 13', ggf. in Verbindung mit Laschen 46 vorgesehen, wodurch ein Strömungsaustausch der ausgangsseitigen Gaskanäle 18' mit den weiteren Gaskanälen 18"' herbeigeführt wird.

Der ausgangsseitige Verwirbelungsabschnitt 50 ist als ausgangsseitiger katalytischer Abschnitt 48 ausgeführt. Hierbei weisen beide Typen von benachbarten Gaskanälen 18', 18"' eine katalytische Beschichtung an ihren Innenwänden in Form einer NOX-Speicherbeschichtung 51 auf. Dadurch ist die gesamte Innenfläche der Gaskanäle 18' und auch der Gaskanäle 18"' katalytisch wirksam. An Stelle eines NOX-Speicherkatalysators kann auch eine abweichende Ausbildung z. B. in Form eines SCR-Katalysators zweckmäßig sein. Hierbei ist dann noch eine Zudosierung von Harnstoff vorzusehen.

Optional weisen die Filterwände 3 des Filterabschnittes 54 noch eine katalytische Beschichtung 53 zur Reduzierung der Zündtemperatur von in den gasdurchlässigen Filterwänden 3 zurückgehaltenen Partikeln auf. Bei einem entsprechenden Verschmutzungsgrad der Filterwände 3 kann der Filterkörper 3 ggf. mit mäßig erhöhter Temperatur betrieben werden, in dessen Folge die eingelagerten, ausgefilterten Partikel verbrannt werden.

Figur 3 zeigt in schematischer Ansicht eine Vorrichtung zur Herstellung eines Halbzeuges 17, das seinerseits zur Herstellung eines Rohlinges für den Filterkörper 1 nach den Fig. 1 und 2 entsprechend der Darstellung nach Fig. 4 vorgesehen ist. Eine erste, zunächst glatte Faserbahn 4 wird entsprechend einem Pfeil 28, einem Paar von gewellten Walzen 20, 20' zugeführt, deren Wellen ineinander kämmen. Die Faserbahn 4 wird durch die ineinander kämmenden Wellen hindurchgeführt, wodurch sie eine wellige Form erhält. Eine weitere, glatte Faserbahn 4' wird entsprechend einem Pfeil 27 der Vorrichtung zugeführt und mittels einer Andruckwalze 29 umgelenkt. Dabei wird die glatte Faserbahn 4' gegen die gewellte Faserbahn 4 gedrückt. Eine dazwischen entsprechend einem Pfeil 32 eingeführte Raupe 21 aus einem keramischen Material bildet später die Verschlussstopfen 22' entsprechend der Darstellung nach den Fig. 1 und 2. Mittels einer angedeuteten Vorrichtung 62 wird ein Kleber zur Bildung einer unterbrochenen Haftspur 57 auf die glatte Faserbahn 4' aufgetropft, wodurch die beiden Faserbahnen 4, 4' später aneinander haften. Die Haftspur 57 wird weiter unten im Zusammenhang mit Fig. 4 näher beschrieben.

Figur 4 zeigt einen nicht vollständig aufgewickelten, aus dem Halbzeug 17 nach Fig. 3 hergestellten Rohling zur Bildung des Filterkörpers 1 nach den Fig. 1 und 2. In den katalytischen Abschnitten 47, 48 bzw. in den Verwirbelungsabschnitten 49, 50 ist die Faserbahn 4 und/oder die Faserbahn 4' mit Ausschnitten 16 versehen, die später beim Sintern die in Fig. 2 dargestellten Öffnungen 13 bilden. Des Weiteren ist streifenweise ein Material aufgetragen, welches die spätere keramische Imprägnierung der Faserbahn 4, 4' verhindert. Dies kann ein geeigneter, insbesondere organischer Kleber wie Heißkleber, Epoxydharz oder dgl. sein. Im gezeigten Ausführungsbeispiel sind hierzu verschiedene parallel zueinander verlaufende, unterbrochene Haftspuren 57 vorgesehen, mittels derer die beiden Faserbahnen 4, 4' aneinander haften. Die Herstellung der unterbrochenen Haftspuren 57 kann beispielsweise durch Auftropfen von Kleber auf die Faserbahn 4' entsprechend der Darstellung nach Fig. 3 erfolgen. An Stelle der Haftspuren 57 oder zusätzlich dazu können auch Auftragungen von Kleber, Imprägniermittel oder dgl. in vergleichbarer Weise aufgebracht werden, die genauso wie die Haftspuren 57 eine keramische Imprägnierung verhindern, ohne jedoch Hafteigenschaften aufzuweisen. Die glatte Faserbahn 4' ist an ihren beiden Längskanten noch mit einer weiteren Haftspur 58 versehen, die jedoch nur der vereinfachten Herstellung des Halbzeuges 17 dient, und die bei der Herstellung des Rohlings in nicht dargestellter Weise abgetrennt wird. Zwischen der gewellten Faserbahn 4 und der glatten Faserbahn 4' befindet sich noch die Raupe 21 nach Fig. 3 zur Bildung der Verschlussstopfen 22' (Fig. 1). Auf ihrer der glatten Faserbahn 4' abgewandten Seite der welligen Faserbahn 4 ist angrenzend an den benachbarten Verwirbelungsabschnitt 50 eine weitere Raupe 21 aus keramischem Material aufgetragen, die beim Aufwickeln des Halbzeuges 17 zu dem gezeigten Rohling die späteren ausgangsseitigen Verschlussstopfen 22 (Fig. 1) bildet.

Im Anschluss an das Aufwickeln des Rohlings oder alternativ nach einer Stapelbildung wird der Rohling entsprechend einem Pfeil 63 in einen Behälter 59 mit einem Tauchbad 60 geführt. Das Tauchbad 60 enthält eine Emulsion 9 mit dem Keramikmaterial 6. Der aus den Faserbahnen 4, 4' gebildete Rohling des Filterkörpers 1 (Fig. 1, 2) wird mit dem Keramikmaterial 6 getränkt, bzw. imprägniert. Die Tränkung kann ggf. durch Aufbringung eines Vakuums unterstützt werden. Es erfolgt jedoch nur eine partielle Imprägnierung, da die Ausschnitte 16 und die Haftspuren 57 keramisch nicht imprägnierte, in Fig. 6 vergleichbar dargestellte Abschnitte 12 bilden.

Bedarfsweise können noch ein oder mehrere zusätzliche Behälter 59' mit Tauchbädern 60' bereitgestellt werden. Das beispielhaft dargestellte Tauchbad 60' enthält eine keramische Emulsion 9', die in ihren Eigenschaften von der keramischen Emulsion 9 des Tauchbades 60 abweicht. Hierdurch können die katalytischen Abschnitte 47, 48 und der Filterabschnitt 54 mit unterschiedlicher keramischer Struktur versehen werden. Durch alternatives Eintauchen des Filterrohlings in eines der beiden Tauchbäder 60, 60' entsprechend der Pfeile 63, 65 oder sequentielles, ggf. partielles Eintauchen des Filterrohlings in beide Tauchbäder 60, 60' entsprechend der Pfeile 63, 64 entstehen Bereiche mit unterschiedlicher keramischer Imprägnierung. Es ist beispielsweise möglich, zuerst den Rohling insgesamt im Tauchbad 60 entsprechend dem Pfeil 63 zu tränken. Anschließend kann eine zusätzliche Tränkung der beiden katalytischen Abschnitte 47, 48 durch partielles Eintauchen der beiden Enden des Rohlings in das Tauchbad 60' (Pfeile 64, 65) herbeigeführt werden. Bei einer Ausbildung mit nur einem katalytischen Abschnitt 47, 48 kann auch zunächst nur der Filterabschnitt 54 in das eine Tauchbad 60 geführt werden (Pfeil 63), woran sich nach Drehung des Rohlings ein Eintauchen des katalytischen Abschnittes 47 (Pfeil 65) anschließt. Auf diese Weise können der Filterabschnitt 54 und die katalytischen Abschnitte 47, 48 derart mit Keramikmaterial 6, 6' imprägniert werden, dass sich im Filterabschnitt 54 und in den katalytischen Abschnitten 47, 48 nach dem Sinterprozess eine unterschiedliche Porosität des gesinterten Keramikmaterials einstellt. Die Porosität des Filterabschnittes 54 kann auf eine optimale Filtrierwirkung eingestellt werden, während unabhängig davon die Porosität der katalytischen Abschnitte 47, 48 auf eine Optimierung der katalytisch wirksamen Oberfläche eingestellt werden kann.

Die beiden Tauchbäder 60, 60' können keramische Emulsionen 9, 9' mit Partikeln aus dem gleichen keramischen Werkstoff, jedoch mit unterschiedlicher Partikelgröße aufweisen. Da die damit infiltrierten Bereiche nicht exakt von einander getrennt sind, findet ein mehr oder weniger fließender Übergang zwischen beiden unterschiedlich porösen Bereichen statt, was für die thermische und mechanische Beständigkeit von Vorteil ist. Alternativ oder zusätzlich zur unterschiedlichen Partikelgröße der keramischen Emulsionen 9, 9' kann auch ein unterschiedlicher keramischer Werkstoff gewählt werden.

Eine weitere Option zur Erzielung von Bereichen mit unterschiedlicher Porosität besteht im Einsatz von Faserbahnen 4, 4' mit innerhalb der Bahnbreite unterschiedlicher Struktur. Beispielsweise kann bei der Herstellung der Faserbahnen 4, 4' aus Filterpapier ein Faserbrei mit unterschiedlicher Faserlänge, Fasergeometrie und/oder Faserkonzentration eingesetzt werden, wodurch sich im Filterpapier Bereiche mit quer zur Bahnrichtung unterschiedlichen Eigenschaften einstellen. Selbst bei einer keramischen Imprägnierung mit nur einem Tauchbad 60 hinterlassen die dann beim Sintern verbrennenden Fasern Bereiche mit unterschiedlicher Porosität.

Es kann auch zweckmäßig sein, die noch nicht keramisch imprägnierte Faserbahn 4, 4' oder den Rohling nach Fig. 4 zunächst mit einer geeigneten Beschichtung zu versehen, die die Bildung einer Porenstruktur vorteilhaft beeinflusst. Die Beschichtung kann anorganischer oder organischer Art sein und den keramischen Imprägnierungsvorgang wahlweise fördern oder mindern, um unterschiedliche Imprägnierungsbereiche zu erzielen. Im Falle einer organischen Beschichtung kann diese zur gezielten Bildung von Hohlräumen beim Sintervorgang beitragen.

Der auf diese Weise gebildete Rohling des Filterkörpers 1 (Fig. 1, 2) wird anschließend unter Temperatur gesintert, wobei der Filterkörper 1 einschließlich des Filterabschnittes 54, beim Verwirbelungsabschnitt 49, 50 und der Verschlussstopfen 22, 22' (Fig. 2) einteilig monolithisch entsteht. Nicht imprägnierte Fasern, beispielsweise im Bereich der Haftspuren 57, 58 verbrennen dabei zumindest näherungsweise rückstandsfrei und hinterlassen Öffnungen 13 entsprechend der Darstellung nach Fig. 2.

Der nach dem Sintervorgang feste, poröse Filterkörper 1 wird anschließend abschnittsweise mit seinem katalytischen Abschnitt 47, 48 und/oder seinem Filterabschnitt 54 in eine oder mehrere, nicht dargestellte Suspensionen beispielsweise aus katalytisch aktiven Teilchen oder Molekülen wie Pt oder Pd getaucht, wodurch die vorgenannten Beschichtungen 52, 53, 54 entstehen. Ggf. kann der Vorgang z.B. mittels Vakuum unterstützt werden. Als Beschichtungstechnik können dazu alle herkömmlichen Verfahren wie z.B. die Sol-Gel-Technik oder das Aufbringen eines so genannten Washcoats zum Einsatz kommen. Das beschichtete Bauteil wird anschließend getrocknet und einer Temperaturbehandlung unterzogen.

Sofern nicht abweichend dargestellt, stimmt das Ausführungsbeispiel nach den Fig. 3 und 4 in seinen Merkmalen und Bezugszeichen mit denjenigen Ausführungsbeispielen überein, wie sie nachfolgend im Zusammenhang mit den Figuren 5, 6 und 7, 8 beschrieben sind.

Figur 5 zeigt eine schematische Darstellung einer weiteren Vorrichtung zur Herstellung des Filterkörpers 1 (Figur 1, 2). Zwei Beschickungswalzen 30, 31 der Vorrichtung sind achsparallel zueinander angeordnet und liegen bündig nebeneinander. Sie drehen sich gegenläufig, wobei in einem keilförmigen Zwischenraum oberhalb ihrer Berührlinie ein Keramikmaterial 6 bevorratet ist. Das Keramikmaterial 6 kann ein trockenes Pulver aus feingemahlener Keramik sein, welches für eine Trockenimprägnierung der Faserbahn 4 vorgesehen ist. Im gezeigten Ausführungsbeispiel ist mit dem Keramikmaterial 6 eine wässrige Emulsion 9 hergestellt. Anstelle von Wasser kann auch eine andere geeignete Flüssigkeit oder ein Flüssigkeitsgemisch zweckmäßig sein. Als Keramikmaterial 6 kommt bevorzugt Aluminiumoxid, Cordierit, Mullit, Siliciumcarbid und/oder Aluminiumtitanat jeweils für sich alleine oder auch in verschiedenen Kombinationen miteinander in Betracht. Eine weitere Walze 10 ist achsparallel zur Beschickungswalze 30 angeordnet und berührt diese entlang einer Berührlinie. Die Beschickungswalze 30 trägt infolge ihrer durch einen Pfeil angegebenen Drehung die keramische Emulsion 9 zur Walze 10 und rollt die keramische Emulsion 9 auf die Oberfläche der Walze 10 auf. Mittels der Walze 10 wird das Keramikmaterial 6 in das Material der unterhalb in Richtung eines Pfeils 28 entlang geführten Faserbahn 4 eingewalzt. Hierzu liegt die Walze 10 mit Anpressdruck auf der Faserbahn 4 auf. Es wird ein Tränken der Faserbahn 4 mit der Emulsion 9 durchgeführt. Die flächige, durchlässige Faserbahn 4 nimmt dabei das feingemahlene Keramikmaterial 6 innerhalb ihres gesamten Querschnitts auf.

Die endlose Faserbahn 4 durchläuft anschließend in Richtung des Pfeils 28 zwei achsparallel zueinander angeordnete, ineinander kämmende gewellte Walzen 20, 20', wodurch die mit dem Keramikmaterial 6 imprägnierte Faserbahn 4 eine gewellte Form erhält. Die Wellen der gewellten Walzen 20, 20' sind wechselseitig etwa konisch ausgeführt, wodurch auch die Wellen der Faserbahn 4 entsprechend der Darstellung nach Fig. 1 wechselseitig konisch, d.h. mit in der Durchströmungsrichtung sich erweiterndem bzw. verengendem Querschnitt geformt werden. Die beiden gewellten Walzen 20, 20' sind temperiert. Dies führt zu einem leichten Antrocknen, jedoch nicht vollständigen Durchtrocknen der gewellten, mit der Emulsion 9 getränkten Faserbahn 4, wodurch die Wellenform stabilisiert wird.

Eine weitere Faserbahn 4' wird in entgegengesetzter Richtung entsprechend einem Pfeil 27 der gezeigten Vorrichtung zugeführt und läuft um eine Andruckwalze 29 um. Bezogen auf die durch den Pfeil 27 angegebene Bewegungsrichtung liegt vor der Andruckwalze 29 ein Sieb 15 auf der Faserbahn 4' auf. Oberhalb des Siebes 15 ist auf diesem ebenfalls eine wässrige Emulsion 9 mit dem Keramikmaterial 6 bevorratet. Die Emulsion 9 wird mittels einer Rakel 11 unter Druck durch das Sieb hindurch in das Material der Faserbahn 4' hineingestrichen, wodurch eine Tränkung der Faserbahn 4' mit der Emulsion 9 erfolgt. Alternativ kann auch eine Trockenimprägnierung der Faserbahn 4' mit dem Keramikmaterial 6 erfolgen. Auch kann es zweckmäßig sein, eine Imprägnierung der Faserbahn 4' mit einer Walzenanordnung 10, 30, 31 entsprechend der gegenüberliegenden Faserbahn 4 vorzunehmen. Auch für die gewellte Faserbahn 4 kann eine Imprägnierung mittels eines Siebes 15 und einer Rakel 11 zweckmäßig sein.

Die Andruckwalze 29 liegt an der unteren gewellten Walze 20 an. Infolge der gegenläufigen Drehung der Andruckwalze 29 und der gewellten Walze 20 werden die glatte Faserbahn 4' und die gewellte Faserbahn 4 aneinander angedrückt und miteinander verbunden. In Durchlaufrichtung hinter der Walzenanordnung 29, 20 entsteht das Halbzeug 17.

Aus dem Halbzeug 17 wird durch Aufwickeln oder durch Stapeln ein Rohling des Filterkörpers 1 (Fig. 1, 2) gebildet. Unter gleichzeitigem Bezug auf Fig. 1 ist zu erkennen, dass die gewellte Faserbahn 4 an ihren Wellenbergen entlang von Kontaktlinien 19, 19' an der gestrichelt angedeuteten, darüber liegenden glatten Faserbahn 4' anliegt und entlang der Kontaktlinien 19, 19' mit ihr verbunden ist. Die Verbindung kann durch einen geeigneten Leim erfolgen. Im gezeigten Ausführungsbeispiel ist die Verbindung durch die keramische Emulsion 9 in den Faserbahnen 4, 4' hergestellt. Es kann auch zweckmäßig sein, entlang der Kontaktlinien 19, 19' zusätzliche keramische Emulsion 9, ggf. in angedickter Form aufzutragen, um eine Verbindung der beiden Faserbahnen 4, 4' zu erreichen. Im verbundenen Zustand des Halbzeuges 17 sind durch die Wellstruktur der Faserbahn 4 und die glatte Form der Faserbahn 4' die späteren Gaskanäle 18, 18', 18", 18"' (Fig. 2) vorgeformt, wobei Seitenwände der gewellten Faserbahn 4 im Filterabschnitt 54 für die Bildung der späteren Filterwände 3 vorgesehen sind.

Das mit der keramischen Emulsion 9 getränkte Halbzeug 17 wird nach der Imprägnierung entspr. Fig. 5 in feuchtem Zustand, also bei noch nicht durchgetrockneter Emulsion 9, in die Form des späteren Filterkörpers 1 nach Figur 1 aufgewickelt oder auch gestapelt und anschließend getrocknet. Beim Aufwickeln bzw. Stapeln werden Wellentäler der gewellten Faserbahn 4 entlang von Kontaktlinien 19" mit der darunter liegenden glatten Faserbahn 4' verbunden, wodurch neben den Gaskanälen 18 auch die weiteren Gaskanäle 18' in der radialen Richtung 37 und in der Umfangsrichtung 55 des etwa zylindrischen Filterkörpers 1 (Figur 1) geschlossen sind. Die Verbindung an den Kontaktlinien 19" erfolgt in gleicher Weise wie an den Kontaktlinien 19, 19'.

Der auf diese Weise gebildete Filterrohling wird nach dem Trocknungsprozess in einem Sinterofen unter Einwirkung von Temperatur gesintert, wobei das Keramikmaterial 6 zu einem monolithischen Keramikkörper zusammengesintert wird. Bei der hohen Sintertemperatur verbrennt das Material der Faserbahnen 4, 4', wodurch eine bestimmte Porosität des Keramikmaterials 6 erreicht wird. Die Porosität ist derart ausgebildet, dass der Abgasstrom 2 (Figur 1, 2) quer zur Fläche der keramischen Filterwände 3 durch diese hindurchströmen kann.

Der Querschnitt der Gaskanäle 18, 18' verändert sich entlang der Axialrichtung 38, und zwar verengen sich die Querschnitte der eingangsseitigen Gaskanäle 18 von der Einströmseite 33 zur Ausströmseite 34 hin. Umgekehrt erweitern sich die Querschnitte der ausgangsseitigen Gaskanäle 18' von der Einströmseite 33 zur Ausströmseite 34 hin, wobei jedoch bei sämtlichen Gaskanälen 18, 18' die Kanalhöhe konstant bleibt. Dies wird erreicht durch eine Wellenform der Faserbahn 4 mit an der Einströmseite 33 breiten und an der Ausströmseite 34 schmalen Wellenbergen. Im gezeigten Ausführungsbeispiel nach Fig. 1 nimmt die Breite der Wellenberge von der Einströmseite 33 zur Ausströmseite 34 hin linear ab. In Folge der konstanten Kanalhöhe und einer eindimensionalen, etwa konischen Krümmung der Faserbahn 4 ist auch der Querschnittsverlauf etwa linear. Es kann aber auch ein abweichender, nichtlinearer Verlauf insbesondere durch mehrdimensionale räumliche Krümmung der Faserbahn 4 zweckmäßig sein. Alternativ kann auch eine Ausgestaltung der Wellen vorteilhaft sein, bei der die Gaskanäle 18, 18' von der Einströmseite 33 zur Ausströmseite 34 hin einen konstanten Querschnitt aufweisen, wie dies beim Ausführungsbeispiel nach Fig. 2 der Fall ist.

Der entlang von Pfeilen 23 in die Gaskanäle 18 eintretende Abgasstrom 2 dringt entsprechend der Darstellung nach Fig. 1 entlang der gesamten Lauflänge der Gaskanäle 18, 18' innerhalb des Filterabschnittes 54 durch die Filterwände 3 entsprechend Pfeilen 24 hindurch. Dadurch verringert sich der eingangsseitige Volumenstrom 23 im Gaskanal 18 entlang dessen Lauflänge, während sich der ausgangsseitige Volumenstrom 25 im Gaskanal 18' entlang dessen Lauflänge vergrößert. Der vorstehend beschriebene Querschnittsverlauf der Gaskanäle 18, 18' führt dazu, dass die Strömungsgeschwindigkeit innerhalb der Gaskanäle 18, 18' sowie die über die Filterwände 3 gemessene Druckdifferenz zwischen den Gaskanälen 18, 18' entlang deren Lauflänge zumindest näherungsweise konstant sind. Die Filtrierbelastung der Filterwände 3 ist dadurch entlang der Lauflänge der Gaskanäle 18, 18' zumindest näherungsweise konstant.

Figur 6 zeigt in perspektivischer Schemadarstellung die endlose Faserbahn 4'. Das nachfolgend Beschriebene gilt sinngemäß auch für die weitere Faserbahn 4 (Fig. 5). Die Faserbahnen 4, 4' bestehen aus Fasern 5. Hierzu kann ein Filz, ein textiles Gewebe oder Gewirke vorgesehen sein. Bevorzugt ist ein offenes, durchlässiges Filterpapier insbesondere aus Zellulosefasern gewählt. Die Faserbahn 4' ist flächig und durchlässig in dem Sinne, dass das feingemahlene Keramikmaterial 6 (Figur 5) zwischen Fasern 5 der Faserbahn 4 eindringen kann. Die Durchlässigkeit der Faserbahn 4 und der Imprägnierungsprozess nach Fig. 5 sind derart aufeinander abgestimmt, dass ein Teil der Fasern 5 nach dem Imprägnieren mit dem Keramikmaterial 6 (Figur 5) an beiden gegenüberliegenden Oberflächen 7, 8 der Faserbahn 4 frei liegt. Dies führt beim Freibrennen der Fasern 5 während des Sinterprozesses dazu, dass die gesinterten keramischen Filterwände 3 durchgängig von einer Oberfläche 7 bis zur gegenüberliegenden Oberfläche 8 porös und damit quer zur Fläche der Filterwände 3 gasdurchlässig für den Abgasstrom 2 (Figur 1) sind.

In bestimmten Bereichen kann es zweckmäßig sein, zumindest abschnittsweise eine abweichende Porosität herbeizuführen. Beispielsweise kann der Filterkörper 1 (Figur 1) im Bereich der glatten Faserbahn 4' eine derart geringe Porosität aufweisen, dass er im technischen Sinne des Filtriervorganges praktisch gasundurchlässig ist, während eine spürbare Gasdurchlässigkeit nur im Bereich der gewellten Faserbahn 4 gewünscht wird. In diesem Falle erfolgt neben der tränkenden Imprägnierung der Faserbahn 4' auch eine geschlossene Oberflächenbeschichtung mit dem Keramikmaterial 6 (Figur 5) an zumindest einer der beiden Oberflächen 7, 8, ohne dass dort die Fasern 5 freiliegen. In diesem Falle entsteht beim Sintern ein geschlossener Keramikkörper, der im Bereich der Oberfläche 7, 8 kaum porös und damit im technischen Sinne gasundurchlässig ist. Dies kann beispielsweise bei der glatten Faserbahn 4 im Filterabschnitt 54 (Fig. 1) zweckmäßig sein, um einen gesteuerten Gasdurchsatz durch die porösen Filterwände 3 der gewellten Faserbahn 4 zu bewirken. Des Weiteren kann noch eine abschnittsweise unterschiedliche Porosität eingestellt werden, wie sie sinngemäß im Zusammenhang mit den Figuren 3 und 4 beschrieben ist, um im Filterabschnitt 54 und im katalytischen Abschnitt 47, 48 (Fig. 2) nach dem Sinterprozess eine unterschiedliche Porosität des gesinterten Keramikmaterials 6 einzustellen.

Es kann zweckmäßig sein, die Faserbahnen 4, 4' als unbeschnittenes Endlosmaterial vollflächig mit dem Keramikmaterial 6 (Figur 5) zu imprägnieren. Nicht imprägnierte Abschnitte 12 können dabei beispielsweise durch Ausstanzung von Ausschnitten 16 zur späteren Bildung von Öffnungen 13 (Fig. 2) oder durch eine Beschneidung eines begrenzten Flächengebildes 36 an dessen Randbereich 26 gebildet werden. Im gezeigten Ausführungsbeispiel nach Figur 6 sind nicht imprägnierte Abschnitte 12 vorgesehen, die selektiv von einer Imprägnierung mit dem Keramikmaterial 6 ausgenommen werden; es erfolgt also nur eine partielle keramische Imprägnierung der Faserbahnen 4, 4'. Ein Teil der nicht imprägnierten Abschnitte 12 wird zur späteren Bildung der Öffnungen 13 (Figur 2) von der Imprägnierung ausgenommen. Ein weiterer nicht imprägnierter Abschnitt 12 ist durch den Randbereich 26 gebildet, der das begrenzte Flächengebilde 36 umgibt. Das begrenzte Flächengebilde 36 weist die Kontur auf, die zum Wickeln des Filterkörpers 1 nach den Figuren 1, 2 erforderlich ist. Das Flächengebilde 36 kann durch Beschneiden der Faserbahn 4 insbesondere durch Ausstanzen der Umfangskontur des Flächengebildes 36 sowie durch Ausstanzen der Ausschnitte 16 hergestellt werden. Es kann auch zweckmäßig sein, auf ein Ausstanzen der Ausschnitte 16 zu verzichten und lediglich die zugehörigen Abschnitte 12 von der Imprägnierung mit dem Keramikmaterial 6 (Figur 5) auszunehmen. Dies erfolgt in weiter unten näher beschriebener Weise. Des Weiteren können in Fig. 2 dargestellte Laschen 46 teilweise ausgestanzt und aus der Ebene der Faserbahn 4, 4' aufgebogen werden, um Öffnungen 13' nach Fig. 2 zu erzeugen. Alternativ oder zusätzlich kann es zweckmäßig sein, eine die keramische Imprägnierung eines Abschnittes 12 verhindernde Auftragung vergleichbar beispielsweise zu den Haftspuren 57, 58 nach Fig. 4 aufzubringen.

Die nur abschnittsweise imprägnierte und/oder beschnittenen Faserbahnen 4, 4' werden in vorstehend beschriebener Weise zu dem Halbzeug 17 gefügt, welches anschließend zu einem Rohling des Filterkörpers 1 nach den Fig. 1, 2 geformt wird. Die imprägnierten Bereiche der Faserbahnen 4, 4' nehmen dabei die Gestalt des zu bildenden Filterkörpers 1 (Fig. 1, 2) an. Beim abschließenden Sinterprozess verbrennen dann die nicht beschnittenen und nicht imprägnierten Abschnitte 12 vollständig und hinterlassen den Filterkörper 1 in seiner nach den Fig. 1 und 2 vorgesehenen Form einschließlich der Öffnungen 13, 13', Laschen 46 und Verschlussstopfen 22, 22' (Figur 2) als einteiligen monolithischen Körper.

Der Darstellung nach Figur 5 ist zu entnehmen, dass die Walze 10 eine Oberflächenstrukturierung 14 aufweist. Diese entspricht in ihrer Form der Kontur des Flächengebildes 36 nach Figur 6. Die keramische Emulsion 9 wird nur durch die erhabenen Flächen der Oberflächenstrukturierung 14 unter Druck in die Faserbahn 4 eingewalzt. In zwischenliegenden, in radialer Richtung zurückversetzten Bereichen der Oberflächenstrukturierung 14 kann keine Imprägnierung mit dem Keramikmaterial 6 erfolgen, so dass die Faserbahn 4 analog zur Faserbahn 4' nach Figur 6 nur teilweise und unter Bildung der nicht imprägnierten Abschnitte 12 mit dem Keramikmaterial 6 imprägniert wird.

Eine alternative Form der Herstellung von nicht imprägnierten Abschnitten 12 in der Faserbahn 4' ergibt sich aus der Darstellung nach Figur 5 im Bereich des Siebes 15. Das Sieb 15 ist vergleichbar zum Siebdruckverfahren mit schematisch angedeuteten Abdeckungen 35 versehen. Die Abdeckungen 35 entsprechen in ihrer Kontur der Form der nicht imprägnierten Abschnitte 12 nach Figur 6. Beim Aufstreichen der keramischen Emulsion 9 unter Druck mittels der Rakel 11 verhindern die Abdeckungen 35, ggf. auch die Ausstanzungen bzw. Ausschnitte 16 (Fig. 6) partiell eine Tränkung und bilden die nicht imprägnierten Abschnitte 12. Eine weitere alternative oder zusätzliche Option besteht nach Figur 5 darin, mittels der Vorrichtung 62 die keramische Imprägnierung verhindernde Haftspuren 57 bzw. Auftragungen aufzubringen, die in ihren Eigenschaften und Wirkungen den Haftspuren 57 bzw. Auftragungen nach den Figuren 3 und 4 entsprechen.

Der Darstellung nach Figur 5 ist noch zu entnehmen, dass vor der Zusammenfügung der beiden Faserbahnen 4, 4' Raupen 21 aus keramischem Material auf die gewellte Faserbahn 4 entsprechend einem Pfeil 32 aufgebracht werden. Die keramischen Raupen 21 werden zwischen den beiden Faserbahnen 4, 4' eingequetscht und bilden später die Verschlussstopfen 22 nach den Figuren 1 und 2. Analog zur Darstellung nach Fig. 4 wird noch eine weitere Raupe 21 auf das Halbzeug 17 aufgetragen, um beim Wickeln oder Stapeln des Rohlings (Fig. 4) die weiteren Verschlussstopfen 22 (Fig. 1, 2) zu erzeugen. Für die wechselseitige Anordnung der Verschlussstopfen 22, 22' nach Figur 1 kann es zweckmäßig sein, die Raupen 21 unterbrochen aufzubringen. Für bestimmte Anwendungsfälle kann es auch zweckmäßig sein, die Verschlussstopfen 22, 22' in Umfangsrichtung durchgängig anzuordnen, wobei dann auch die zugeordneten Raupen 21 durchgängig aufgebracht werden. Die Raupen 21 bestehen bei den Fig. 3, 4 und 5 aus einem feuchten, weichen keramischen Material und werden gemeinsam mit den Faserbahnen 4, 4' getrocknet und anschließend gesintert, wodurch ein monolithischer, keramischer Filterkörper 1 nach den Figuren 1 oder 2 entsteht.

Fig. 7 zeigt ein Ausführungsbeispiel eines erfindungsgemäßen Halbzeuges 17 mit einem Filterabschnitt 54 und einem dem Filterabschnitt 54 in Strömungsrichtung vorgeschalteten katalytischen Abschnitt 47. Aus dem Halbzeug 17 wird in gleicher Weise ein Filterrohling und daraus ein Filterkörper 1 hergestellt, wie es im Zusammenhang mit den Fig. 1 bis 6 beschrieben ist. Für die Bildung von Gaskanälen 18, 18' des Filterabschnitts 54 ist zwischen zwei glatten Faserbahnen 4' eine gewellte Faserbahn 4 angeordnet. Wechselseitig in Wellentälern der gewellten Faserbahn 4 angeordnete Verschlussstopfen 22, 22' verschließen die eingangsseitigen Gaskanäle 18 und die ausgangsseitigen Gaskanäle 18' vergleichbar zur Darstellung nach den Fig. 1 und 2. Abweichend von der Darstellung nach Fig. 1 sind die Verschlussstopfen 22, 22' derart auf der Oberseite der gewellten Faserbahn 4 angeordnet, dass nur in jedem zweiten Wellental ein ausgangsseitiger Verschlussstopfen 22 bzw. ein eingangsseitiger Verschlussstopfen 22' angeordnet ist. Auch auf der Unterseite der gewellten Faserbahn 4 sind entsprechende Verschlussstopfen in den Wellentälern angeordnet, jedoch der besseren Übersichtlichkeit halber nicht dargestellt. Im Unterschied zur Ausgestaltung nach Fig.1 ergeben sich also eingangsseitige Gaskanäle 18 und ausgangseitige Gaskanäle 18' sowohl auf der Oberseite als auch auf der Unterseite der gewellten Faserbahn 4, die nach oben bzw. nach unten durch die jeweils angrenzende glatte Faserbahn 4' begrenzt sind. Die Gaskanäle 18, 18' mit den Verschlussstopfen 22, 22' können aber auch entsprechend der Darstellung nach Fig. 1 ausgebildet sein.

Separat von der gewellten Faserbahn 4 des Filterabschnitts 54 ist eine weitere gewellte Faserbahn 4" vorgesehen und in der Längsrichtung 38 mit Abstand zu der gewellten Faserbahn 4 des Filterabschnitts 54 angeordnet. Die gewellte Faserbahn 4" ist zwischen den gleichen, durchgehenden und als Deckschichten wirkenden glatten Faserbahnen 4' wie die gewellte Faserbahn 4 gehalten und bildet Gaskanäle 18^{IV}, 18^{V} des katalytischen Abschnitts 47. Im Querströmungsabschnitt 61 sind die Gaskanäle 18, 18', 18^{IV}, 18^{V} abweichend von der Darstellung nach den Fig. 1 und 2 nicht durchgehend, sondern unterbrochen. Die Gaskanäle 18^{IV}, 18^{V} enden gemeinsam mit der zugeordneten gewellten Faserbahn 4" eingangsseitig des Querströmungsabschnittes 61, während die Gaskanäle 18, 18' des Filterabschnitts 54 gemeinsam mit der zugeordneten gewellten Faserbahn 4 erst stromab des Querströmungsabschnitts 61 beginnen. Die Gaskanäle 18^{IV}, 18^{V} weisen keine Verschlussstopfen auf, können also unter Ausnutzung des gesamten zur Verfügung stehenden Bauteilquerschnitts vom einströmenden Abgas durchströmt werden, während für die Einströmung in den nachgeschalteten Filterabschnitt 54 nur die Hälfte des gesamten Querschnittes, nämlich in Form der eingangsseitigen Gaskanäle 18 zur Verfügung steht.

Für eine saubere, ungestörte Überleitung des Gasstromes aus den katalytisch beschichteten Gaskanälen 18^{IV}, 18^{V} an den eingangsseitigen Verschlussstopfen 22' vorbei in die eingangsseitigen Gaskanäle 18 des Filterabschnitts 54 ist in dem Abstand zwischen der gewellten Faserbahn 4" und der gewellten Faserbahn 4 ein freier Bereich ohne gewellte Faserbahn vorgesehen. Durch diesen freien Bereich ist ein Querströmungsabschnitt 61 gebildet, der in Hochrichtung ebenso wie der katalytische Abstand 47 und der Filterabschnitt 54 durch die insgesamt ununterbrochen durchgehenden glatten Faserbahnen 4' begrenzt ist. Der Querströmungsabschnitt 61 wird nicht nur in der Längsrichtung 38 durchströmt. Durch das Fehlen einer gewellten Faserbahn kann sich darüber hinaus quer zur Längsrichtung 38 in der Ebene des Halbzeuges 17 eine anteilige Querströmung ausbilden, wodurch eine saubere Überleitung der Strömung vom katalytischen Abschnitt 47 in den Filterabschnitt 54 bewirkt wird. Zur weiteren Verbesserung einer Querströmung kann es zusätzlich zweckmäßig sein, Öffnungen 13 entsprechend der Darstellung nach Fig. 2 in der gewellten Faserbahn 4" des katalytischen Abschnitts 47 vorzusehen. Des Weiteren kann es vorteilhaft sein, alternativ oder zusätzlich einen weiteren katalytischen Abschnitt 48 (Fig. 2) stromab des Filterabschnitts 54 vorzusehen, wobei dann zwischen dem katalytischen Abschnitt 48 und dem Filterabschnitt 54 in analogere Weise ein Querströmungsabschnitt 61 angeordnet ist.

Die Herstellung des Halbzeuges 17 und die keramische Imprägnierung kann in gleicher Weise erfolgen wie es im Zusammenhang mit den Fig. 1 bis 6 beschrieben ist. Die getrennte Ausbildung der gewellten Faserbahnen 4, 4" erlaubt zusätzlich den Einsatz unterschiedlicher Papier- bzw. Fasersorten. Des Weiteren kann abweichend von der Darstellung nach Fig. 7, in der die beiden Faserbahnen 4, 4" die gleiche Wellenlänge und gleiche Wellenform aufweisen, auch eine unterschiedliche Wellenlänge und Wellenform gewählt werden. Insbesondere ist es möglich, die gewellte Faserbahn 4" des katalytischen Abschnitts 47 mit einer im Vergleich zum Filterabschnitt 54 verkürzten Wellenlänge auszubilden, wodurch sich eine erhöhte Anzahl von Gaskanälen 18^{IV}, 18^{V} mit einer entsprechend vergrößerten, katalytisch wirksamen Oberfläche ergibt. Die Wellenhöhe beider gewellten Faserbahnen 4, 4" ist jedoch vorzugsweise gleich groß, so dass sich in der Längsrichtung 38 ein konstanter Abstand zwischen den beiden als Deckschichten wirkenden glatten Faserbahnen 4' ergibt. Dies erlaubt wahlweise die Bildung eines zumindest näherungsweise zylindrischen Wickelkörpers mit in der Längsrichtung 38 konstantem Durchmesser oder die Bildung eines Stapelkörpers mit in der Längsrichtung 38 konstanter Höhe.

Fig. 8 zeigt eine erfindungsgemäße Variante der Anordnung nach Fig. 7, bei der der Filterabschnitt 54 identisch zum Ausführungsbeispiel nach Fig. 7 ausgebildet ist. Im katalytischen Abschnitt 47 sind jedoch insgesamt zwei gewellte Faserbahnen 4" unter Zwischenlage einer weiteren glatten Faserbahn 4'" übereinander gestapelt und zwischen den beiden als Deckschichten wirkenden Faserbahnen 4' angeordnet. Es können auch drei oder mehr gewellte Faserbahnen 4" unter Zwischenlage jeweils einer weiteren glatten Faserbahn 4'" zu einem Paket übereinander gestapelt und zwischen den glatten Faserbahnen 4' angeordnet werden. Gegebenenfalls kann auf die Zwischenlage der weiteren glatten Faserbahn 4"' verzichtet werden.

Die gewellten Faserbahnen weisen im Vergleich zur gewellten Faserbahn 4 des Filterabschnitts 54 sowohl eine geringere Wellenlänge als auch eine geringere Wellenhöhe auf. Hierdurch ergibt sich im Vergleich zum Ausführungsbeispiel nach Fig. 7 eine deutlich erhöhte Anzahl von Gaskanälen 18^{IV}, 18^{V} des katalytischen Abschnitts 47 mit insgesamt ebenfalls deutlich erhöhter katalytisch wirksamer Oberfläche. Um vergleichbar zum Ausführungsbeispiel nach Fig. 7 in der Längsrichtung 38 eine konstante Höhe zwischen den beiden glatten Faserbahnen 4' beizubehalten, ist die Gesamthöhe der Gaskanäle 18^{IV}, 18^{V} zwischen den glatten Faserbahnen 4' identisch zur Höhe der Gaskanäle 18, 18' des Filterabschnitts 54. Im gezeigten Ausführungsbeispiel sind beide Schichten von Gaskanälen 18^{IV}, 18^{V} identisch zueinander ausgebildet, so dass deren Einzelhöhe halb so groß ist wie die Höhe der Gaskanäle 18, 18'. Auch hier kann neben einer abweichenden Wellenlänge eine abweichende Wellenform im Vergleich zur gewellten Faserbahn 4 des Filterabschnitts 54 gewählt werden. In den übrigen Merkmalen und Bezugszeichen stimmt das Ausführungsbeispiel nach Fig. 8 mit demjenigen nach Fig. 7 überein.

## Patentansprüche

1. Dieselpartikelfilter umfassend einen keramischen Filterkörper (1) aus einem Keramikmaterial (6) zur Filtrierung eines Abgasstromes (2) eines Dieselmotors, wobei der Filterkörper (1) Gaskanäle (18, 18') aufweist, die in einem Filterabschnitt (54) mit flächigen und porösen Filterwänden (3) versehen sind, wobei die Filterwände (3) zur Durchströmung mit dem Abgasstrom (2) quer zur ihrer Fläche vorgesehen sind und wobei zwischen zwei glatten Faserbahnen (4') eine gewellte Faserbahn (4) angeordnet ist, die zusammen mit den beiden glatten Faserbahnen (4') die Gaskanäle des Filterabschnitts bildet, **dadurch gekennzeichnet, dass** der Filterkörper (1) zusätzlich zum Filterabschnitt (54) mindestens einen katalytischen Abschnitt (47, 48) zur katalytischen Reinigung des Abgasstromes (2) aufweist, wobei der Filterkörper (1) zusammen mit dem Filterabschnitt (54) und dem mindestens einen katalytischen Abschnitt (47, 48) einteilig aus mindestens einer keramisch imprägnierten Faserbahn (4, 4') unter Bildung der Gaskanäle (18, 18') geformt und derart unter Temperatur durch Sintern gebildet ist, dass Fasern (5) des Fasermaterials freigebrannt sind, und dass das Keramikmaterial (6) unter Bildung des Filterkörpers (1) mit dem mindestens einen katalytischen Abschnitt (47, 48) und dem Filterabschnitt (54) einteilig monolithisch zusammengesintert ist, wobei die Gaskanäle (18, 18', 18^{IV}, 18^{V}) zwischen dem Filterabschnitt (54) und dem katalytischen Abschnitt (47, 48) unter Bildung eines Querströmungsabschnittes unterbrochen sind, derart, dass zwischen zwei glatten Faserbahnen (4') mindestens zwei in der Längsrichtung (38) der Gaskanäle (18, 18') mit einem Abstand zueinander angeordnete gewellte Faserbahnen (4, 4") angeordnet sind, wobei die eine gewellte Faserbahn (4") zusammen mit den beiden glatten Faserbahnen (4') die Gaskanäle (18^{IV}, 18^{V}) des katalytischen Abschnitts (47, 48) bildet, wobei die andere gewellte Faserbahn (4) zusammen mit den beiden glatten Faserbahnen (4') die Gaskanäle (18, 18') des Filterabschnitts (54) bildet, und wobei der Abstand zwischen den mindestens zwei gewellten Faserbahnen (4, 4") den Querströmungsabschnitt bildet.

2. Dieselpartikelfilter nach Anspruch 1, **dadurch gekennzeichnet, dass** ein eingangsseitiger katalytischer Abschnitt (47) eine katalytische Beschichtung in Form einer oxydierenden Katalysatorbeschichtung (52) zur Verminderung des CO- bzw. HC-Gehaltes im Abgasstrom (2) aufweist.

3. Dieselpartikelfilter nach Anspruch 1 oder 2, **dadurch gekennzeichnet, dass** ein ausgangsseitiger katalytischer Abschnitt (48) eine katalytische Beschichtung aufweist.

4. Dieselpartikelfilter nach Anspruch 3, wobei der katalytische Abschnitt (48) eine katalytische Beschichtung in Form einer NOX-Speicherbeschichtung (51) aufweist.

5. Dieselpartikelfilter nach einem der Ansprüche 1 bis 4, **dadurch gekennzeichnet, dass** der Filterabschnitt (54) eine katalytische Beschichtung (53) zur Reduzierung der Zündtemperatur von in den gasdurchlässigen Filterwänden (3) zurückgehaltenen Partikeln aufweist.

6. Dieselpartikelfilter nach einem der Ansprüche 1 bis 5, **dadurch gekennzeichnet, dass** benachbarte Gaskanäle (18, 18') wechselseitig auf einer Einströmseite (33) des Filterabschnitts (54) und auf einer Ausströmseite (34) des Filterabschnitts (54) durch Verschlussstopfen (22, 22') verschlossen sind, wobei der Filterabschnitt (54) bezogen auf eine Längsrichtung (38) der Gaskanäle (18, 18') zwischen den Verschlussstopfen (22, 22') liegt, und wobei der mindestens eine katalytische Abschnitt (47, 48) bezogen auf die Längsrichtung (38) außerhalb des durch die Verschlussstopfen (22, 22') begrenzten Filterabschnitts (54) liegt.

7. Dieselpartikelfilter nach Anspruch 6, wobei die Verschlussstopfen (22, 22') aus Keramikmaterial sind.

8. Dieselpartikelfilter nach einem der vorhergehenden Ansprüche, **dadurch gekennzeichnet, dass** die gewellte Faserbahn (4") des katalytischen Abschnitts (47, 48) eine von der gewellten Faserbahn (4) des Filterabschnitts (54) abweichende Wellenlänge und/oder abweichende Wellenform aufweist.

9. Dieselpartikelfilter nach Anspruch 8 wobei die gewellte Faserbahn (4") des katalytischen Abschnitts (47, 48) eine gegenüber der gewellten Faserbahn (4) des Filterabschnitts (54) verringerte Wellenlänge aufweist.

10. Dieselpartikelfilter nach einem der vorhergehenden Ansprüche, **dadurch gekennzeichnet, dass** zur Bildung der Gaskanäle (18^{IV}, 18^{V}) des katalytischen Abschnitts (47, 48) mindestens zwei gewellte Faserbahnen (4") zwischen den beiden glatten Faserbahnen (4') übereinander gestapelt sind.

11. Dieselpartikelfilter nach Anspruch 10 wobei die mindestens zwei gewellten Faserbahnen (4") zwischen den beiden glatten Faserbahnen (4') unter Zwischenlage einer weiteren glatten Faserbahn (4"') übereinander gestapelt sind.

12. Dieselpartikelfilter nach einem der vorhergehenden Ansprüche, **dadurch gekennzeichnet, dass** Wände (45) der Gaskanäle (18, 18', 18", 18"'), die durch die keramisch imprägnierte Faserbahn (4, 4') gebildet sind, im Bereich des mindestens einen katalytischen Abschnitts (47, 48) Öffnungen (13, 13') aufweisen, die die Gaskanäle (18, 18', 18", 18"') strömungsleitend miteinander verbinden.

13. Dieselpartikelfilter nach Anspruch 12, **dadurch gekennzeichnet, dass** im Bereich des mindestens einen mit Öffnungen (13) versehenen katalytischen Abschnitts (47, 48) beide Typen von benachbarten Gaskanäle (18, 18", 18', 18"') eine katalytische Beschichtung aufweisen.

## Claims

1. Diesel particulate filter comprising a ceramic filter body (1) made of a ceramic material (6) for filtering an exhaust gas flow (2) of a diesel engine, the filter body (1) featuring gas channels (18, 18') which are provided with flat and porous filter walls (3) in a filter section (54), the filter walls (3) being provided for being flowed through by the exhaust gas flow (2) transversely to its plane and a wavy fiber web (4) being disposed between two smooth fiber webs (4') which forms together with the two smooth fiber webs (4') the gas channels of the filter section, **characterized in that** the filter body (1) features in addition to the filter section (54) at least one catalytic section (47, 48) for a catalytic cleaning of the exhaust gas flow (2), the filter body (1) being formed together with the filter section (54) and the at least one catalytic section (47, 48) as one piece from at least one ceramically impregnated fiber web (4, 4') by forming the gas channels (18, 18') and formed by sintering under temperature such that fibers (5) of the fiber material are burned free and that the ceramic material (6), by forming the filter body (1), is sintered together monolithically in one piece with the at least one catalytic section (47, 48) and the filter section (54), the gas channels (18, 18', 18^{IV}, 18^{V}) being interrupted between the filter section (54) and the catalytic section (47, 48) by forming a cross-flow section such that at least two wavy fiber webs (4, 4") disposed at a distance to each other in longitudinal direction (38) of the gas channels (18, 18') are disposed between two smooth fiber webs (4'), the one wavy fiber web (4") forming together with the two smooth fiber webs (4') the gas channels 18^{IV}, 18^{V}) of the catalytic section (47, 48), the other wavy fiber web (4) forming together with the two smooth fiber webs (4') the gas channels (18, 18') of the filter section (54), and the distance between the at least two wavy fiber webs (4, 4') forming the cross-flow section.

2. Diesel particulate filter according to claim 1, **characterized in that** an inlet-sided catalytic section (47) features a catalytic coating as oxidizing catalyst coating (52) for reducing the CO or HC content in the exhaust gas flow (2).

3. Diesel particulate filter according to claim 1 or 2, **characterized in that** an outlet-sided catalytic section (48) features a catalytic coating.

4. Diesel particulate filter according to claim 3, the catalytic section (48) featuring a catalytic coating as NOX storage coating (51).

5. Diesel particulate filter according to one of the claims 1 to 4, **characterized in that** the filter section (54) features a catalytic coating (53) for reducing the ignition temperature of particles retained in the gas-permeable filter walls (3).

6. Diesel particulate filter according to one of the claims 1 to 5, **characterized in that** adjacent gas channels (18, 18') are alternately closed on an inflow side (33) of the filter section (54) and on an outflow side (34) of the filter section (54) by means of plugs (22, 22'), the filter section (54) being located relative to a longitudinal direction (38) of the gas channels (18, 18') between the plugs (22, 22'), and the at least one catalytic section (47, 48) being located relative to the longitudinal direction (38) outside of the filter section (54) defined by the plugs (22, 22').

7. Diesel particulate filter according to claim 6, the plugs (22, 22') being made of ceramic material.

8. Diesel particulate filter according to one of the above claims, **characterized in that** the wavy fiber web (4") of the catalytic section (47, 48) features a wave length and/or wave shape differing from the wavy fiber web (4) of the filter section (54).

9. Diesel particulate filter according to claim 8, the wavy fiber web (4") of the catalytic section (47, 48) featuring a reduced wave length compared with the wavy fiber web (4) of the filter section (54).

10. Diesel particulate filter according to one of the above claims, **characterized in that** for forming the gas channels (18^{IV}, 18^{V}) of the catalytic section (47, 48) at least two wavy fiber webs (4") are stacked on top of each other between the two smooth fiber webs (4').

11. Diesel particulate filter according to claim 10, the at least two wavy fiber webs (4") being stacked on top of each other between the two smooth fiber webs (4') by laying another smooth fiber web (4"') therebetween.

12. Diesel particulate filter according to one of the above claims, **characterized in that** the walls (45) of the gas channels (18, 18', 18", 18"') formed by the ceramically impregnated fiber web (4, 4') feature in the area of the at least one catalytic section (47, 48) openings (13, 13') which connect the gas channels (18, 18', 18", 18"') with each other in a flow-conducting manner.

13. Diesel particulate filter according to claim 12, **characterized in that** in the area of the at least one catalytic section (47, 48) provided with openings (13) both types of adjacent gas channels (18, 18', 18", 18"') feature a catalytic coating.

## Revendications

1. Filtre à particules diesel comprenant un corps de filtre céramique (1) réalisé dans un matériau céramique (6), destiné à filtrer un flux de gaz d'échappement (2) d'un moteur diesel, le corps de filtre (1) présentant des canaux de gaz (18, 18') qui sont pourvus, dans une section de filtre (54), de parois filtrantes (3) planes et poreuses, les parois filtrantes (3) étant prévues pour faire passer le flux de gaz d'échappement (2) en travers de leur surface, et une bande de fibres (4) ondulée étant disposée entre deux bandes de fibres (4') lisses et formant avec les deux bandes de fibres (4') lisses les canaux de gaz de la section de filtre, **caractérisé en ce que** le corps de filtre (1) présente, en plus de la section de filtre (54), au moins une section catalytique (47, 48) destinée au nettoyage catalytique du flux de gaz d'échappement (2), le corps de filtre (1) étant constitué, avec la section de filtre (54) et la section catalytique (47, 48), au moins au nombre d'une, en un bloc d'une bande de fibres (4, 4') imprégnée de céramique, au moins au nombre d'une, formant ainsi les canaux de gaz (18, 18'), et étant réalisé par frittage à haute température, de sorte que des fibres (5) au matériau fibreux soient dénudées par brûlure et que le matériau céramique (6) soit aggloméré par frittage avec la section catalytique (47, 48), au moins au nombre d'une, et la section de filtre (54), en un bloc monolithique, formant ainsi le corps de filtre (1), les canaux de gaz (18, 18', 18^{IV}, 18^{V}) étant interrompus entre la section de filtre (54) et la section catalytique (47, 48), formant ainsi une section de flux transversal, de manière à ce qu'au moins deux bandes de fibres (4, 4") ondulées espacées l'une de l'autre dans le sens longitudinal (38) des canaux de gaz (18, 18') soient disposées entre deux bandes de fibres (4') lisses, la bande de fibres (4") ondulée formant avec les deux bandes de fibres (4') lisses les canaux de gaz (18^{IV}, 18^{V}) de la section catalytique (47, 48), et l'autre bande de fibres (4) ondulée formant avec les deux bandes de fibres (4') lisses les canaux de gaz (18, 18') de la section de filtre (54), et l'écart entre les bandes de fibres (4, 4") ondulées, au moins au nombre de deux, formant la section de flux transversal.

2. Filtre à particules diesel selon la revendication 1, **caractérisé en ce qu'**une section catalytique (47) côté entrée comporte un revêtement catalytique sous forme de revêtement de catalyseur (52) oxydant en vue de réduire la concentration de CO ou de HC dans le flux de gaz d'échappement (2).

3. Filtre à particules diesel selon la revendication 1 ou 2, **caractérisé en ce qu'**une section catalytique (48) côté sortie présente un revêtement catalytique.

4. Filtre à particules diesel selon la revendication 3, la section catalytique (48) présentant un revêtement catalytique avec substance d'accumulation de NOX (51).

5. Filtre à particules diesel selon l'une des revendications 1 à 4, **caractérisé en ce que** la section de filtre (54) présente un revêtement catalytique (53) en vue d'abaisser la température d'inflammation de particules retenues dans les parois filtrantes (3) perméables aux gaz.

6. Filtre à particules diesel selon l'une des revendications 1 à 5, **caractérisé en ce que** des canaux de gaz (18, 18') adjacents sont obturés en alternance par des bouchons (22, 22') d'un côté entrée (33) de la section de filtre (54) et d'un côté sortie (34) de la section de filtre (54), la section de filtre (54) étant située entre les bouchons (22, 22'), par rapport à une direction longitudinale (38) des canaux de gaz (18, 18'), et la section catalytique (47, 48), au moins au nombre d'une, étant située hors de la section de filtre (54) limitée par les bouchons (22, 22'), par rapport à la direction longitudinale (38).

7. Filtre à particules diesel selon la revendication 6, les bouchons (22, 22') étant réalisés dans une matière céramique.

8. Filtre à particules diesel selon l'une des revendications précédentes, **caractérisé en ce que** la bande de fibres (4") ondulée de la section catalytique (47, 48) présente une longueur d'ondulation et/ou une forme d'ondulation différente de celle de la bande de fibres (4) ondulée de la section de filtre (54).

9. Filtre à particules diesel selon la revendication 8, la bande de fibres (4") ondulée de la section catalytique (47, 48) présentant une longueur d'ondulation inférieure à celle de la bande de fibres (4) ondulée de la section de filtre (54).

10. Filtre à particules diesel selon l'une des revendications précédentes, **caractérisé en ce que**, pour former les canaux de gaz (18^{IV}, 18^{V}) de la section catalytique (47, 48), au moins deux bandes de fibres (4") ondulées sont empilées l'une sur l'autre entre les deux bandes de fibres (4') lisses.

11. Filtre à particules diesel selon la revendication 10, les deux bandes de fibres (4") ondulées, au moins au nombre de deux, étant empilées l'une sur l'autre entre les deux bandes de fibres (4') lisses, avec une autre bande de fibres (4"') lisse intercalée.

12. Filtre à particules diesel selon l'une des revendications précédentes, **caractérisé en ce que** des parois (45) des canaux de gaz (18, 18', 18", 18"', lesquels sont formées par la bande de fibres (4, 4') imprégnée de céramique présentent, dans la zone de la section catalytique (47, 48), au moins au nombre d'une, des ouvertures (13, 13') qui relient les canaux de gaz (18, 18', 18", 18"') les uns aux autres de manière à guider le flux.

13. Filtre à particules diesel selon la revendication 12, **caractérisé en ce que**, dans la zone de la section catalytique (47, 48), au moins au nombre d'une, pourvue d'ouvertures, les deux types de canaux de gaz adjacents (18, 18' 18", 18"') présentent un revêtement catalytique.
